(19) Europäisches Patentamt
European Patent Office
Office européen des brevets

(11) **EP 1 985 802 B1**

(12) **EUROPÄISCHE PATENTSCHRIFT**

(45) Veröffentlichungstag und Bekanntmachung des Hinweises auf die Patenterteilung:
**20.03.2013 Patentblatt 2013/12**

(21) Anmeldenummer: **08150874.9**

(22) Anmeldetag: **31.01.2008**

(51) Int Cl.:
**F01D 5/14** *(2006.01)* **F04D 29/38** *(2006.01)*

(54) **Vorderkantenverlauf für Turbomaschinenkomponenten**

Leading edge curve for turbo engine components

Déroulement de bord avant pour composants de turbomachines

(84) Benannte Vertragsstaaten:
**DE FR GB**

(30) Priorität: **27.04.2007 DE 102007020476**

(43) Veröffentlichungstag der Anmeldung:
**29.10.2008 Patentblatt 2008/44**

(73) Patentinhaber: **Rolls-Royce Deutschland Ltd & Co KG**
**15827 Blankenfelde-Mahlow (DE)**

(72) Erfinder: **Clemen, Carsten**
**15749, Mittenwalde (DE)**

(74) Vertreter: **Kronthaler, Wolfgang N.K. et al**
**Kronthaler, Schmidt & Coll.**
**Patentanwälte**
**Pfarrstraße 14**
**80538 München (DE)**

(56) Entgegenhaltungen:
**EP-A1- 0 661 413    WO-A1-2005/054633**
**US-A- 3 989 406**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf den Vorderkantenverlauf für Turbomaschinenkomponenten wie Lauf- und Leitschaufeln, Fanschaufeln oder Propeller mit einer teilweise parabolischen, hyperbolischen oder polynomischen Ausbildung.

Der bekannte gekrümmte Verlauf der Vorderkanten der Lauf- und Leitschaufeln von Verdichtern und Turbinen von Turbomaschinen, wie z.B. einem Gasturbinentriebwerk, wird - ohne Systematik - unter Anwendung der Vorderkantenpfeilung auf der Grundlage von Erfahrungswerten bestimmt. Der Vorderkantenverlauf ist auf der Basis der Erfahrung des Konstrukteurs durch die mehreren radialen Koordinaten über die Schaufelhöhe jeweils zugeordnete axiale Koordinate (Richtung der Maschinenachse) definiert. Der Vorderkantenverlauf ist somit nicht durch stetige mathematische Funktionen bestimmt, so dass aufgrund von Unstetigkeitsstellen (Sprüngen) im Kurvenverlauf die Strömung an der Vorderkante ungleichmäßig ist und es zu Grenzschichtablösungen und Strömungsverlusten kommen kann. Zwar können die Sprünge weggeschliffen werden, jedoch ist dann die Ausbildung der mittels Vorderkantenpfeilung ausgebildeten Kurve nicht mehr genau genug. Andererseits verringert sich die Lebensdauer der Schaufeln aufgrund der durch die Vorderkantensprünge bedingten Kerbwirkung. Ein systematisch definierter Vorderkantenverlauf ist außerdem geeignet, die Profilbelastungsverteilung an spaltnahen Lauf- und Leitschaufelschnitten gezielt zu vergleichmäßigen und dadurch den Wirkungsgrad und die Stabilität zu erhöhen. Ebenso ist es möglich, die hohen Anströmmachzahlen an Fanspitzen gezielt zu reduzieren und so Schallemissionen zu vermindern.

Aus WO 2005/054633 A1 und EP 0 661 413 A1 ist ein Vorderkantenverlauf für eine Leitschaufel als gepfeilte Schaufelvorderkante vorbekannt, die aus einem geraden und einem gekrümmten Teil besteht, wobei der gekrümmte Teil parabolisch, hyperbolisch oder polynomisch ausgebildet ist. Dabei kommt es jedoch beim Übergang vom gekrümmten zum geraden Teil per Definition zu einem Krümmungssprung, der starke negative Auswirkungen auf die Strömung an der Schaufelvorderkante hat. Es existiert als mathematische Tatsache keine krümmungsfreier Übergang zwischen einer Geraden und jedwedem Polynom x-ten Grades.

Der Erfindung liegt die Aufgabe zugrunde, einen verbesserten Vorderkantenverlauf für Lauf- und Leiträder, Fans oder Propeller von Turbomaschinen anzugeben.

Diese Aufgabe wird erfindungsgemäß mit den durch die Merkmale des kennzeichnenden Teils des Patentanspruches 1 angegebenen passenden Kurvenfunktionen des Vorderkantenverlaufs gelöst.

Die erfindungsgemäße Ausgestaltung des Vorderkantenverlaufs stellt im Gegensatz zu den vorbekannten Ausbildungen des Vorderkantenverlaufs eine Form dar, die per Definition keinerlei Krümmungssprung in ihrem Verlauf aufweist und dadurch eine wesentliche Verbesserung der Schaufelumströmung über ihren gesamten Definitionsbereich ermöglicht. Die Erfindung offenbart insbesondere einen Vorderkantenverlauf, der tatsächlich von der Schaufelspitze bis zum Schaufelfuß krümmungsfrei verläuft, da die Verläufe des gekrümmten und des geraden Teils einer Definition entstammen und der Vorderkantenverlauf nicht aus mehreren Definitionen zusammengesetzt ist.

Der Erfindung liegt die Aufgabe zugrunde, einen stetigen, eindeutig definierten und wiederholbaren gepfeilten Vorderkantenverlauf für Lauf- und Leiträder, Fans oder Propeller von Turbomaschinen anzugeben.

Erfindungsgemäß wird die Aufgabe mit einem durch die Merkmale des Patentanspruchs 1 gekennzeichneten Vorderkantenverlauf gelöst.

Der Vorderkantenverlauf ist zum einen ausgehend von der freien Spitze und zum anderen von der festen Seite oder Nabe der Turbomaschinenkomponente durch die Lage der Vorderkante in einem Koordinatensystem aus der in Richtung der Maschinenachse verlaufenden axialen Koordinate und der senkrecht zu dieser über die Schaufelhöhe verlaufenden radialen Koordinate bestimmt und ergibt sich an der Schaufelspitze aus der Beziehung

$$AxialeKoordinate[\%Schaufelh\ddot{o}he] = \frac{1}{5} Erstreckung[\%Schaufelh\ddot{o}he] \tan Pfeilung_{Spitze}\left(1 - e^{\frac{-5(100\%-Schaufelh\ddot{o}he[\%])}{Erstreckung[\%Schaufelh\ddot{o}he]}}\right)$$

(Formel 1)

und an der Nabe aus der Beziehung

$$AxialeKoordinate[\%Schaufelh\ddot{o}he] = \frac{1}{5} Erstreckung[\%Schaufelh\ddot{o}he] \tan Pfeilung_{Nabe}\left(1 - e^{\frac{-Schaufelh\ddot{o}he[\%]}{Erstreckung[\%Schaufelh\ddot{o}he]}}\right)$$

(Formel 2),

woraus in Abhängigkeit von dem Pfeilungswinkel an der Spitze bzw. der Nabe und der radialen Erstreckung der Pfeilung, die auf der Basis der Betriebsparameter der Turbomaschine vorgegeben werden, für die jeweilige Schaufelhöhe in Prozent die zugehörige axiale Koordinate zur Bestimmung des Vorderkantenverlaufs errechnet wird. Die Erstreckung der Pfeilung ist der Bereich der Schaufelhöhe in Prozent, in dem die Neigung der Vorderkante von 90°in Bezug auf die Maschinenachse bzw. die axiale Koordinate abweicht bzw. der Pfeilungswinkel größer 0° ist. Die Formeln 1 und 2 gelten für alle Erstreckungen zwischen 0% und 100% der Schaufelhöhe und für alle von 0° - bezogen auf die radiale Koordinate - abweichenden Pfeilungswinkel. Der Vorderkantenverlauf ist dadurch eindeutig und wiederholbar definiert und für alle Schaufeln mit gleicher Pfeilung und Erstreckung identisch. Es treten keine lokalen Unstetigkeiten an der Vorderkante auf, die die lokale Umströmung an der Vorderkante negativ beeinflussen würden oder mit negativen Kerbwirkungen verbunden wären. Ein Nachschleifen (Glätten) der Vorderkante kann daher entfallen. Durch den aerodynamisch vorteilhaften stetigen (glatten) Verlauf der Vorderkante wird eine gleichmäßige Strömung ohne Grenzschichtablösung erzielt, so dass die Verluste verringert werden und der Wirkungsgrad verbessert wird.

Die Erfindung wird anhand eines Ausführungsbeispiels näher erläutert. In der zugehörigen Zeichnung zeigen:

Fig. 1    eine schematische Darstellung zur Definition des gepfeilten Vorderkantenverlaufs einer Laufschaufel in einem Koordinatensystem; und

Fig. 2    drei beispielhafte gepfeilte Vorderkantenverläufe an einem freien Schaufelende bei gleichem Pfeilungswinkel, jedoch jeweils unterschiedlicher Erstreckung der Pfeilung.

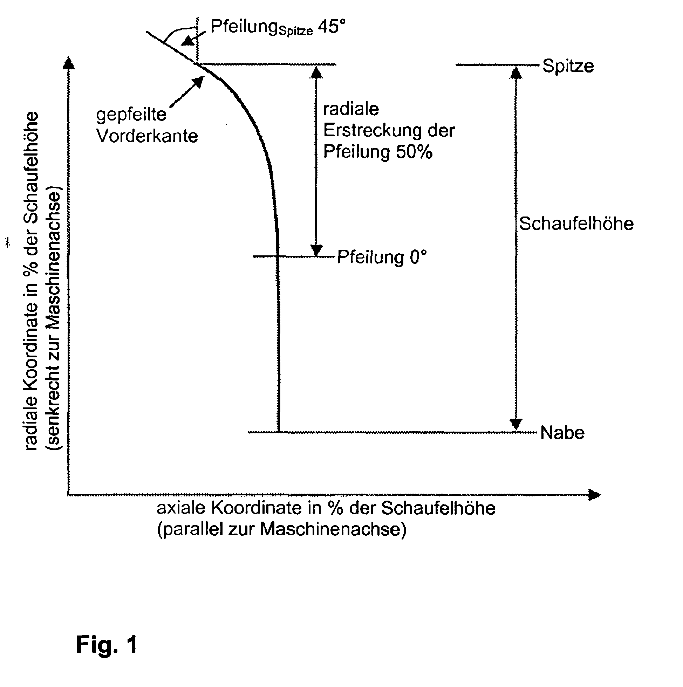

Fig. 1 zeigt eine sich über die Schaufelhöhe von der Spitze zur Nabe erstreckende Vorderkante einer Laufschaufel für eine Turbomaschine mit einer von der Schaufelspitze ausgehenden gepfeilten Vorderkante in einem Koordinatensystem mit einer parallel zur Achse der Turbomaschinenachse verlaufenden axialen Koordinate (in Prozent der Schaufelhöhe) und einer senkrecht zu dieser verlaufenden radialen Koordinate (in Prozent der Schaufelhöhe).

Die Zeichnung zeigt weiterhin den - hier beispielhaft mit 45° festgelegten - Pfeilungswinkel an der Schaufelspitze, das heißt die Pfeilung$_{Spitze}$ und die von der Schaufelspitze ausgehende radiale Erstreckung in Prozent der Schaufelhöhe. Die Erstreckung der Pfeilung ist als der Bereich über der Schaufelhöhe definiert, in dem der Pfeilungswinkel (die Pfeilung) von 0° abweicht, das heißt die Neigung der Vorderkante gegenüber der Achse der Turbomaschine nicht 90° beträgt. Zur Bestimmung des von der Nabe ausgehenden Vorderkantenverlaufs werden analoge Parameter verwendet, das heißt, der Pfeilungswinkel an der Nabe (Pfeilung$_{Nabe}$) und die von der Nabe ausgehende radiale Erstreckung der Pfeilung$_{Nabe}$ bis zum Pfeilungswinkel 0°.

Zur Bestimmung des Vorderkantenverlaufs wird - auf der Basis von Erfahrungswerten - zum einen die Pfeilung an der Spitze bzw. Nabe festgelegt, die aerodynamisch vorteilhaft bei etwa 40° liegt, aber beispielsweise aus Festigkeitsgründen auch deutlich geringer sein kann, aber in der Regel in einem Bereich zwischen 20 und 40° liegt. Des Weiteren wird die Erstreckung der Pfeilung von der Spitze bzw. Nabe der Schaufel bis zum Pfeilungswinkel 0° festgelegt. Üblicherweise erstreckt sich eine von der Spitze und der Nabe ausgehende Pfeilung auf Werte zwischen 40 und 60% der Schaufelhöhe.

Die einer bestimmten Schaufelhöhe (in Prozent) zugeordnete axiale Koordinate (in Prozent der Schaufelhöhe) des von der Spitze ausgehenden Vorderkantenverlaufs ergibt sich aus

$$AxialeKoordinate[\%Schaufelhöhe] = \frac{1}{5} Erstreckung[\%Schaufelhöhe]\tan Pfeilung_{Spitze}\left(1 - e^{\frac{-5(100\%-Schaufelhöhe[\%])}{Erstreckung[\%Schaufelhöhe]}}\right)$$

(Formel 1).

Der Vorderkantenverlauf an der Nabe ist bestimmt durch

$$AxialeKoordinate[\%Schaufelhöhe] = \frac{1}{5} Erstreckung[\%Schaufelhöhe]\tan Pfeilung_{Nabe}\left(1 - e^{\frac{-Schaufelhöhe[\%]}{Erstreckung[\%Schaufelhöhe]}}\right)$$

(Formel 2).

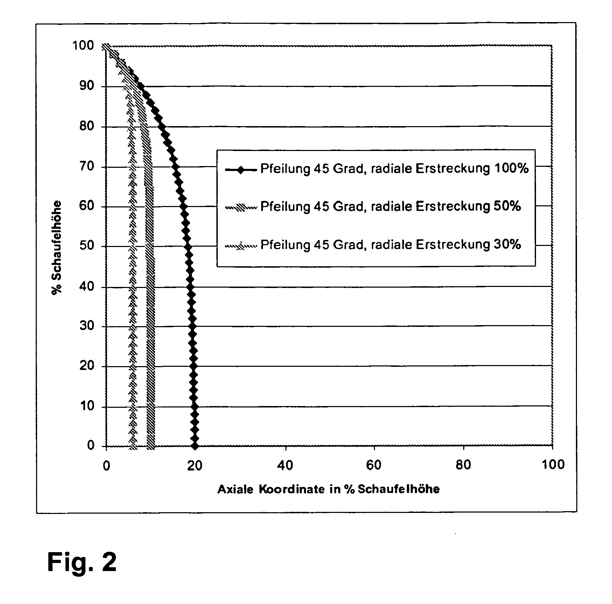

Fig. 2 zeigt drei verschiedene, anhand der Formel 1 bestimmte - von der Schaufelspitze einer Laufschaufel ausgehende - Vorderkantenverläufe bei einer übereinstimmenden Pfeilung von 45°, jedoch bei einer jeweils anderen Erstreckung, nämlich von 100%, 50% und 30%. Unter Vorgabe dieser oder anderer Parameter ist der jeweilige Vorderkantenverlauf eindeutig und wiederholbar bestimmt. In der gleichen Weise ist auch der von der Nabe ausgehende Vorderkantenverlauf durch die Formel 2 und auf der Basis von Erfahrungswerten vorgegebene Pfeilungs- und Erstreckungsparameter festgelegt. Schließlich werden so auch die Vorderkantenverläufe anderer Turbomaschinenkomponenten wie Leitschaufeln, Fanschaufeln oder Propeller ausgeführt.

Der Vorderkantenverlauf ist mathematisch und nicht in Abhängigkeit von der individuellen Erfahrung des Konstrukteurs zufällig definiert und daher exakt wiederholbar. Es können keine lokalen Unstetigkeiten im Vorderkantenverlauf auftreten, so dass die Vorderkante ohne aufwendige Nacharbeit aerodynamisch optimal ausgebildet ist.

**Patentansprüche**

1.  Vorderkantenverlauf für Turbomaschinenkomponenten wie Lauf- und Leitschaufeln, Fanschaufeln oder Propeller mit einer teilweise parabolischen, hyperbolischen oder polynomischen Ausbildung,
    **dadurch gekennzeichnet,**
    **dass** bei vorgegebenem Pfeilungswinkel an der Spitze und an der Nabe und vorgegebener Erstrekkung der Pfeilung in Prozent der Schaufelhöhe bis zum Pfeilungswinkel 0° der durch die jeweilige axiale Koordinate in Richtung der Maschinenachse in Bezug auf die prozentuale Schaufelhöhe bestimmte Vorderkantenverlauf ausgehend von der Spitze oder der freien Seite der Turbomaschinenkomponente durch die Beziehung

$$AxialeKoordinate[\%Schaufelhöhe] = \frac{1}{5}Erstreckung[\%Schaufelhöhe]\tan Pfeilung_{Spitze}\left(1 - e^{\frac{-5(100\%-Schaufelhöhe[\%])}{Erstreckung[\%Schaufelhöhe]}}\right)$$

und ausgehend von der Nabe oder der nicht freien Seite der Turbomaschinenkomponente durch die Beziehung

$$AxialeKoordinate[\%Schaufelhöhe] = \frac{1}{5}Erstreckung[\%Schaufelhöhe]\tan Pfeilung_{Nabe}\left(1 - e^{\frac{-Schaufelhöhe[\%]}{Erstreckung[\%Schaufelhöhe]}}\right)$$

definiert ist.

2.  Vorderkantenverlauf nach Anspruch 1, **dadurch gekennzeichnet**, das die von der Spitze oder der Nabe ausgehende Erstreckung der Pfeilung zwischen 40% und 60% der Schaufelhöhe beträgt.

3.  Vorderkantenverlauf nach Anspruch 1, **dadurch gekennzeichnet, dass** der unter aerodynamischen und Festigkeitsaspekten festgelegte Pfeilungswinkel zwischen 20° und 40° beträgt.

**Claims**

1.  Course of the leading edge for turbomachine components, such as rotor blades and stator vanes, fan blades or propellers with partially parabolic, hyperbolic or polynomial design,
    **characterized in that**
    at a given sweep angle at the tip and at the hub and at a given extension of the sweep in percent of the blade height to the sweep angle 0°, the course of the leading edge, which is determined by the respective axial coordinate in the direction of the machine axis relative to the blade height in percent and extending from the tip or the free side of the turbomachine component, is defined by the relation:

$$axial\ coordinate[\%blade\ height] = \frac{1}{5}extension[\%blade\ height]\tan sweep_{tip}\left(1 - e^{\frac{-5(100\%-blade\ height\ [\%])}{extension[\%blade\ height]}}\right)$$

whereas the course of the leading edge extending from the hub or the firm side of the turbomachine component is defined by the relation:

$$\text{axial coordinate}[\%\text{blade height}] = \frac{1}{5}\text{extension}[\%\text{blade height}]\tan \text{sweep}_{\text{hub}}\left(1 - e^{\frac{-5\,\text{blade height}\,[\%]}{\text{extension}\,[\%\text{blade height}]}}\right)$$

2. Course of the leading edge in accordance with Claim 1, **characterized in that** the extension of the sweep from the tip or the hub ranges between 40 percent and 60 percent of the blade height.

3. Course of the leading edge in accordance with Claim 1, **characterized in that** the sweep angle determined under aerodynamical and strength aspects ranges between 20° and 40°.

**Revendications**

1. Courbe de bord d'attaque pour composants de turbomachines tels qu'aubes mobiles et fixes, aubes de soufflantes ou hélices, avec une configuration partiellement parabolique, hyperbolique ou polynomiale,
   **caractérisée en ce que**
   pour un angle de flèche prédéfini à la pointe et au moyeu et pour une étendue prédéfinie de la flèche en pourcentage de la hauteur d'aube jusqu'à l'angle de flèche 0°, la courbe de bord d'attaque, déterminée par la coordonnée axiale respective dans la direction de l'axe de machine en référence au pourcentage de la hauteur d'aube, et partant de la pointe ou du côté libre du composant de turbomachine, est définie par la relation :

$$\text{Coordonnée axiale}[\%\text{hauteur d'aube}] = \frac{1}{5}\text{étendue}[\%\text{hauteur d'aube}]\tan \text{flèche}_{\text{pointe}}\left(1 - e^{\frac{-5\,(100\%-\text{hauteur d'aube}\,[\%])}{\text{étendue}\,[\%\text{hauteur d'aube}]}}\right)$$

et partant du moyeu ou du côté fixe du composant de turbomachine, la courbe de bord d'attaque est définie par la relation :

$$\text{Coordonnée axiale}[\%\text{hauteur d'aube}] = \frac{1}{5}\text{étendue}[\%\text{hauteur d'aube}]\tan \text{flèche}_{\text{moyeu}}\left(1 - e^{\frac{-5\,\text{hauteur d'aube}\,[\%]}{\text{étendue}\,[\%\text{hauteur d'aube}]}}\right)$$

2. Courbe de bord d'attaque selon la revendication n° 1, **caractérisée en ce que** l'étendue de la flèche partant de la pointe ou du moyeu est comprise entre 40 % et 60 % de la hauteur d'aube.

3. Courbe de bord d'attaque selon la revendication n° 1, **caractérisée en ce que** l'angle de flèche défini en tenant compte d'aspects aérodynamiques et de résistance est compris entre 20° et 40°.

EP 1 985 802 B1

**Fig. 1**

6

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005054633 A1
- EP 0661413 A1